(19) **Europäisches Patentamt**
**European Patent Office**
**Office européen des brevets**

(11) **EP 4 708 654 A1**

(12) **EUROPEAN PATENT APPLICATION**

(43) Date of publication:
**11.03.2026 Bulletin 2026/11**

(21) Application number: **25197003.4**

(22) Date of filing: **20.08.2025**

(51) International Patent Classification (IPC):
**H02M 1/00** *(2006.01)* **H02M 3/07** *(2006.01)*
**H02M 3/158** *(2006.01)* **H02M 1/32** *(2007.01)*

(52) Cooperative Patent Classification (CPC):
**H02M 3/07; H02M 1/0095; H02M 3/072;**
**H02M 3/158; H02M 1/32**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **29.08.2024 US 202418819825**

(71) Applicant: **Avago Technologies International**
**Sales**
**Pte. Limited**
**Singapore 768923 (SG)**

(72) Inventors:
• **Baker, Michael**
**Fort Collins, CO 80528 (US)**
• **Hayes, Eric Martin**
**Fort Collins, CO 80526 (US)**
• **McNitt, John**
**Fort Collins, CO 80528 (US)**
• **Kirchoefer, John Robert**
**Fort Collins, CO 80526 (US)**
• **Rutherford, Mark David**
**Wellington, CO 80549 (US)**
• **Kazama, Taisuke**
**Timnath, CO 80547 (US)**

(74) Representative: **Grünecker Patent- und**
**Rechtsanwälte**
**PartG mbB**
**Leopoldstraße 4**
**80802 München (DE)**

(54) **MULTI-FUNCTIONAL SWITCHING AND LINEAR VOLTAGE REGULATION**

(57) An integrated circuit chip includes a vlimiter controller, a capacitive buck controller, a multi-level buck controller and a switch controller. The vlimiter controller outputs vlimiter signals that cause the integrated circuit chip to perform as a voltage limiter. The capacitive buck controller outputs capacitive buck signals that cause the integrated circuit chip to perform as a capacitive buck converter. The multi-level buck controller outputs multi-level buck signals that cause the integrated circuit chip to perform as a multi-level buck converter. The switch controller selects between the vlimiter signals, the capacitive buck signals and the multi-level buck signals.

**FIG. 1**

EP 4 708 654 A1

## Description

### BACKGROUND

Electronic devices from different manufacturers can receive a transfer of power. In some instances, operational voltage regulation in these electronic devices can have a multitude of options based on application requirements.

### BRIEF DESCRIPTION OF DRAWINGS

The accompanying drawings, which are incorporated in and form a part of this specification, illustrate examples of the disclosure and, together with the description, explain principles of the examples.

FIG. 1 illustrates a functional block diagram of a device, in accordance with one or more embodiments of the disclosure.

FIGS. 2-5 illustrate exemplary power converters, in accordance with one or more embodiments of the disclosure.

In the drawings, like reference symbols and numerals indicate the same or similar components. Like elements in the various figures are denoted by like reference symbols and numerals for consistency. Unless otherwise indicated, like elements and method steps are referred to with like reference numerals.

### DETAILED DESCRIPTION OF THE INVENTION

The following describes technical solutions in this specification with reference to the accompanying drawings. Exemplary embodiments are described in detail with reference to the accompanying drawings.

The terminology used herein is for describing various examples only, and is not to be used to limit the disclosure. Unless otherwise defined, all terms, including technical and scientific terms, used herein have the same meaning as commonly understood by one of ordinary skill in the art to which this disclosure pertains and after an understanding of the disclosure of this application.

Terms, such as those defined in commonly used dictionaries, are to be interpreted as having a meaning that is consistent with their meaning in the context of the relevant art and the disclosure of this application. Although the present technology has been described by referring to certain examples, workers skilled in the art will recognize that changes may be made in form and detail without departing from the scope of the discussion.

Many electronic devices capable of receiving power can require extra circuitry to perform additional functions associated with the primary function of outputting power. The extra circuitry can consume a significant amount of area on a semiconductor integrated circuit chip, which can increase the cost of the electronic device and can result in an increased consumption of power. According, there is a need in the art for an improved electronic device.

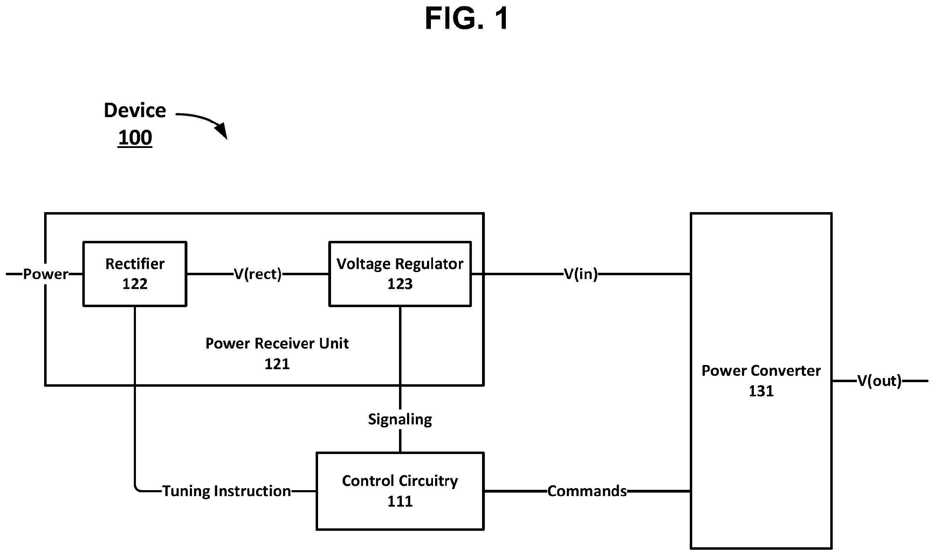

Referring to FIG. 1, a functional block diagram of device 100 according to exemplary embodiments is shown. Device 100 may include control circuitry 111, power receiver unit 121, and power converter 131. Those skilled in the art will appreciate there may be additional components in device 100. In some examples, an integrated circuit chip may include power receiver unit 121 and another integrated circuit chip may include power converter 131.

Device 100 may be configured as any type of electrically-powered device that has computing capability. For example, device 100 may be configured as a mobile communication device including, but not limited to, a mobile phone, a smart phone, cell phone, or tablet. Device 100 may be configured as a wearable device, a smartwatch, a fitness tracker or a personal digital assistant (PDA). In some examples, device 100 may be found in apparatuses such as autonomous vehicles, robots and drones. In other examples, device 100 may be configured as a media device (e.g., media playing and/or recording device). Device 100 may include a portable music player, an audio device such as an audio recorder, an audio converter, an audio player, or a speaker (e.g., a Bluetooth-enabled speaker). In other instances, device 100 may include a video device such as a video display, a video recorder, a camera, or other video device. In another example, device 100 may be configured as, a driver assistance module in a vehicle, an emergency transponder, a pager, a satellite television receiver, a stereo receiver, a computer system, music player, laptop or tablet computer, home appliance, or virtually any other device. Device 100 may be configured as a computer (e.g., a laptop computer). In other examples, device 100 may be configured as a computing and/or entertainment device for a vehicle. The device 100 may be any portable electronic device that can be carried by or worn on a person.

Control circuitry 111 is electronic hardware implemented as any suitable processing circuitry. The processing circuitry may include, but not limited to at least one of a microcontroller, a microprocessor, a single processor, and a multiprocessor. Control circuitry 111 may include at least one of an embedded controller (EC), a central processing unit (CPU), an accelerated processing unit (APU), an application specific integrated circuit (ASIC), field programmable gate arrays (FPGA), control logic, a state machine, programmable processor, or the like. Control circuitry 111 may be implemented as electronic hardware that may include digital circuits, analog circuits or a combination of both digital and analog circuits. Analog circuits may include analog components that are suitable to process analog gate signals. Digital circuits may include switches and gates that are suitable to process digital gate signals.

FIG. 1 illustrates an example power receiver unit 121 in which aspects of the present disclosure may be implemented. Components of power receiver unit 121 may include rectifier 122 and voltage regulator 123. Those skilled in the art will appreciate there may be additional components in power receiver unit 121.

In the example of FIG. 1, power may flow, wirelessly or by wire, into device 100. The power may be in the form of AC (alternating current) power and/or DC (direct current) power. Rectifier 122 may be the voltage source. Rectifier 122 is circuitry that may rectify the power into a rectified voltage V(rect). Rectified voltage V(rect) is a DC voltage. In some instances, control circuitry 111 may send a tuning instruction along wiring into rectifier 122. The tuning instruction may command tuning, by rectifier 122, to the center frequency of the power. In response to producing rectified voltage V(rect), rectifier 122 may transform the power into rectified voltage V(rect).

Voltage regulator 123 is circuitry that reduces or eliminates voltage fluctuations that may appear in rectified voltage V(rect). Voltage fluctuations are transients in the voltage level of a voltage. Transients may include voltage spikes, momentary increases and decreases of voltage, voltage ripple and/or other sudden uncontrolled transitions that may occur in the voltage. Control circuitry 111 may provide signaling that configures voltage regulator 123 to convert the rectified voltage V(rect) into an input voltage V(in). Input voltage V(in) is a DC voltage. In response to converting rectified voltage V(rect) into input voltage V(in), voltage regulator 123 may maintain input voltage V(in) at a constant voltage level despite any fluctuation in rectified voltage V(rect).

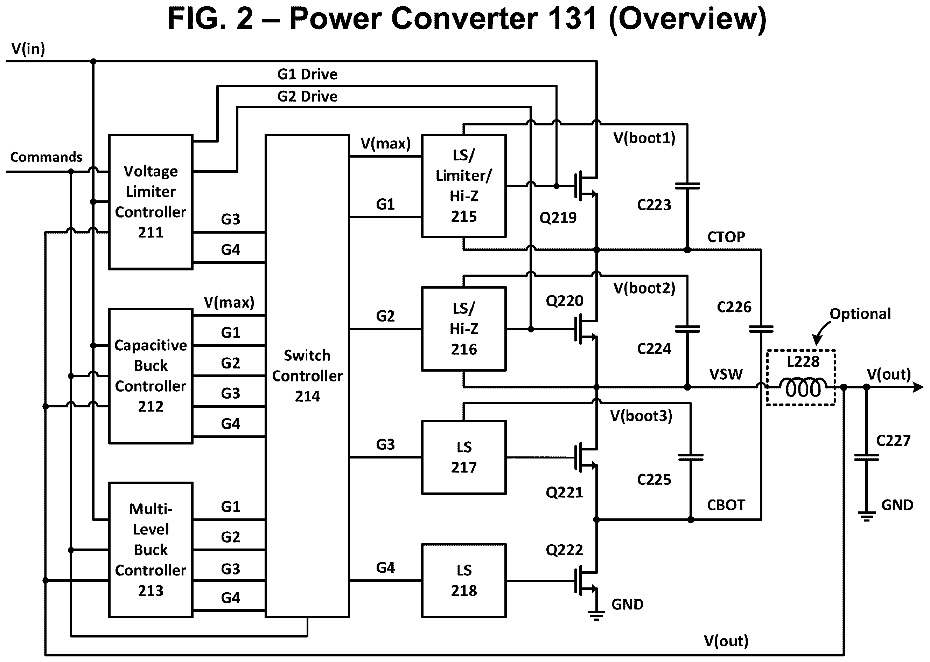

Referring to FIG. 2, an exemplary power converter 131 is illustrated. Power converter 131 may deliver multi-functional power regulation that can be pre-programmed depending on a functional application of power converter 131. For example, power converter 131 is circuitry that may condition input voltage V(in). To condition input voltage V(in), power converter 131 may operate as a voltage limiter, a capacitive buck controller or a multi-level buck controller. The voltage limiter, the capacitive buck controller and the multi-level buck controller may share common output devices in power converter 131 depending on the multi-functional power regulation, as will be explained in detail.

Included in power converter 131 are vlimiter controller 211, capacitive buck controller 212, multi-level buck controller 213, switch controller 214, level shifters 215-218, switches Q219-Q222, capacitors C223-C227 and inductor L228. Those skilled in the art will appreciate there may be additional components in power converter 131.

Switches Q219-Q222 may be implemented as N-type metal-oxide-semiconductor (NMOS) transistors. For example, switches Q219-Q222 may each be an N-type laterally-diffused metal-oxide semiconductor (LDNMOS) transistor. Alternatively, any of the switches Q219-Q222 may be implemented as a Field Effect Transistor (FET), a bipolar transistor, a P-type metal-oxide-semiconductor (PMOS) transistor, or any other switching device.

Referring to capacitors C223-C225, boot capacitor C223 may store a voltage V(boot1), boot capacitor C224 may store a voltage V(boot2) and boot capacitor C225 may store a voltage V(boot3). Level shifter 215 is connected in parallel with boot capacitor C223. The source of switch Q219 is coupled to boot capacitor C223, level shifter 215 and the drain of switch Q220. The gate of switch Q219 is coupled to voltage limiter controller 211 and level shifter 215. Level shifter 216 is connected in parallel with boot capacitor C224. The source of switch Q220 is coupled to boot capacitor C224, level shifter 216 and the drain of switch Q221. The gate of switch Q220 is coupled to voltage limiter controller 211 and level shifter 216. The gate of switch Q221 is coupled to level shifter 217. Boot capacitor C225 is coupled to level shifter 217 and the source of switch Q221. The drain of switch Q222 is coupled to the source of switch Q221. Level shifter 218 is coupled to the gate of switch Q222.

Via node CTOP, a terminal of flying capacitor C226 may be coupled to the source of switch Q219 and the drain of switch Q220. The drain of switch Q219 may be coupled to input voltage V(in). Via Node VSW, a terminal of inductor L228 may be coupled to the source of switch Q220 and the drain of switch Q221. Inductor L228 is an optional component that may be omitted in some instances. Via node CBOT, another terminal of flying capacitor C226 may be coupled to the source of switch Q221 and the drain of switch Q222. The source of switch Q222 and a terminal of shunt capacitor C227 may be coupled to ground. Another terminal of terminal of inductor L228 may be coupled to another terminal of shunt capacitor C227, on which output voltage V(out) may appear.

In some examples, a power converter integrated circuit chip may include voltage limiter controller 211, capacitive buck controller 212, multi-level buck controller 213, switch controller 214, level shifters 215-218 and switches Q219-Q222. Those skilled in the art will appreciate there may be additional components in the power converter integrated circuit chip. A motherboard on which the power converter integrated circuit chip resides may include capacitors C223-C227 and inductor L228. Those skilled in the art will appreciate there may be additional components on the motherboard. As will be explained in detail, voltage limiter controller 211, capacitive buck controller 212 and multi-level buck controller 213 may share switch controller 214, level shifters 215-218, switches Q219-Q222, capacitors C223-C227 and inductor L228 depending on the multi-functional power regulation.

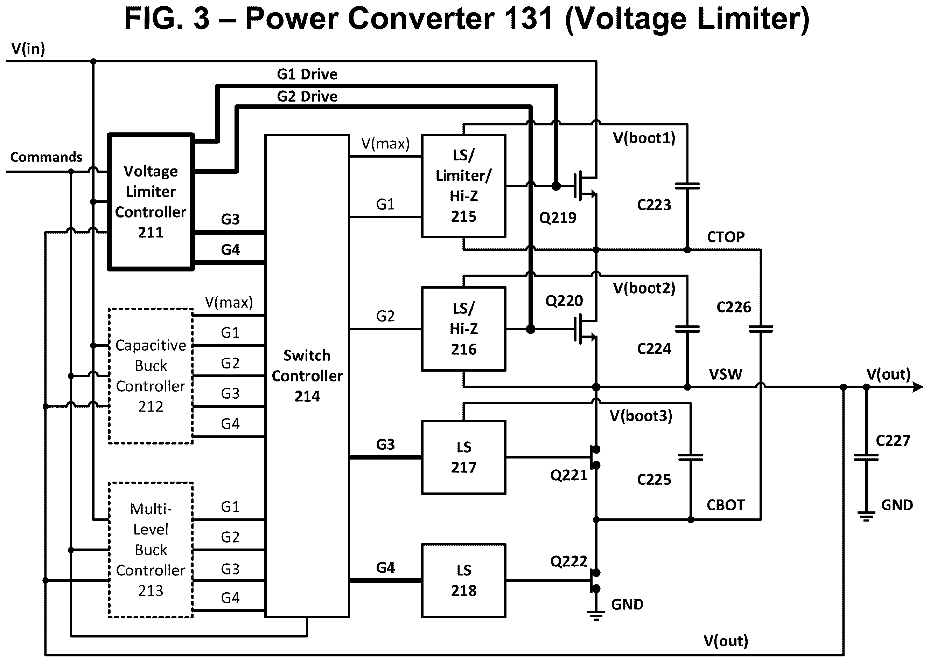

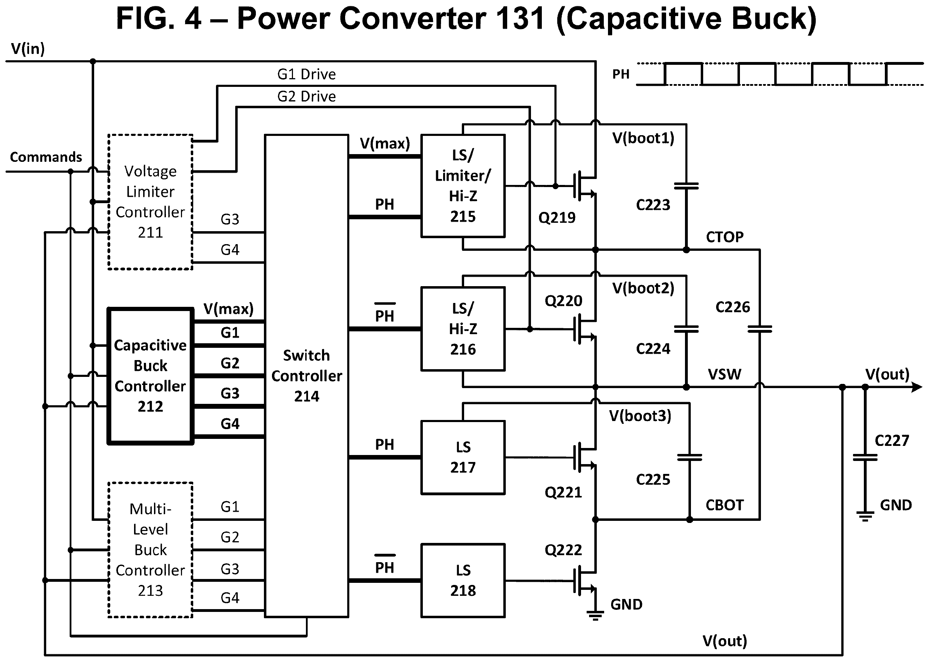

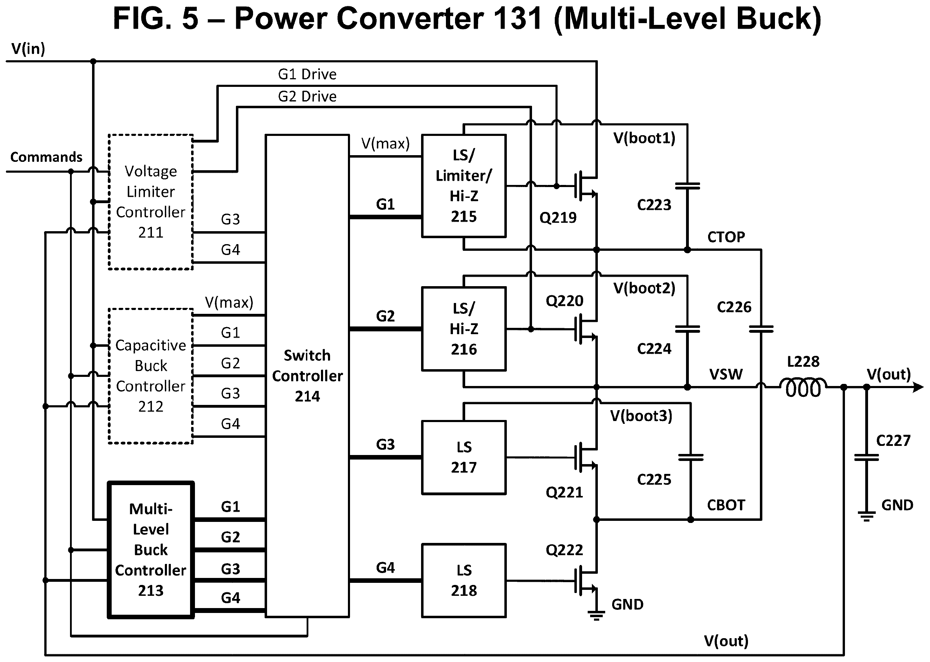

In the example of FIGS. 2-5, switch controller 214 may be a switching multiplexer. A switching multiplexer is circuitry may electrically connect one of many input signals to a single output line. For example, in FIG. 3, switch controller 214 may route signals G3 and G4 from vlimiter controller 211 to level shifters 217 and 218, respectively. Switch controller 214 may route voltage V(max) and signals G1 through G4 from capacitive buck controller 212 to level shifters 215 through 218 in the form of signal PH and inverted signal PH, respectively, as illustrated in the example of FIG. 4. In FIG. 5, switch controller 214 may route signals G1 through G4 from multi-level buck controller 213 to level shifters 215 through 218, respectively, as illustrated in the example of FIG. 5.

Switch controller 214 may be implemented as electronic hardware that may include digital circuits, analog circuits or a combination of both digital and analog circuits. Analog circuits may include analog components that are suitable to process analog gate signals. Digital circuits may include switches and gates that are suitable to process digital gate signals. A pre-programmed command from control circuitry 111 may configure switch controller 214 to select which of the signals from vlimiter controller 211, capacitive buck controller 212, multi-level buck controller 213 that are to be sent to level shifters 215 through 218.

The example of FIG. 3 illustrates power converter 131 configured as a voltage limiter. A voltage limiter is circuitry that may prevent input voltage V(in) from exceeding a predetermined voltage level. From control circuitry 111, power converter 131 may receive commands that include a vlimiter command. The vlimiter command may configure power converter 131 to operate as the voltage limiter. For example, the vlimiter command may cause vlimiter controller 211 to output signals G1 drive and G2 drive. Signals G1 drive and G2 drive are analog signals that cause switches Q219 and Q220 to regulate the voltage level of prevent input voltage V(in) from exceeding a predetermined voltage level. In addition, level shifters 215-216 are placed into a high impedance state in response to power converter 131 being configured as a voltage limiter. Signals G3-G4 from vlimiter controller 211 may cause switches Q221 and Q222 to become conductive and electrically connect the source of switch Q220 to ground, as illustrated in the example of FIG. 3. Typically, inductor L228 may be absent in cases where power converter 131 is configured as a voltage limiter. The vlimiter command may also cause switch controller 214 to output signals G3-G4 from vlimiter controller 211 while disregarding voltage V(max) and signals G1 through G4 from capacitive buck controller 212 and while disregarding signals G1 through G4 from multi-level buck controller 213. In cases where power converter 131 is configured as the voltage limiter, power converter 131 is inhibited from operating as a capacitive buck converter. Power converter 131 is also inhibited from operating as a multi-level buck converter in cases where power converter 131 is configured as the voltage limiter.

The example of FIG. 4 illustrates power converter 131 configured as the capacitive buck converter. From control circuitry 111, power converter 131 may receive commands that include a capacitive buck command. The capacitive buck command may configure power converter 131 to operate as a capacitive buck converter. The capacitive buck converter, also known as a step-down converter, is circuitry that may reduce a higher-level voltage to a lower-level voltage while concurrently increasing the current of the lower-level voltage to an amount greater than a current associated with the higher-level voltage.

As illustrated in FIG. 4, the capacitive buck command may cause capacitive buck controller 212 to output voltage V(max) and signals G1 through G4 to switch controller 214 and may also cause switch controller 214 to output voltage V(max) and signals G1 through G4 from capacitive buck controller 212 in the form of voltage V(max) and signal PH. The capacitive buck command may cause switch controller 214 to disregard G1 drive, G2 drive, signal G3 and signal G4 from vlimiter controller 211 while also disregarding signals G1 through G4 from multi-level buck controller 213.

In cases where power converter 131 operates as the capacitive buck converter, power converter 131 may perform DC-to-DC conversion on input voltage V(in). For example, power converter 131 may receive input voltage V(in) from power receiver unit 121 and perform DC-to-DC conversion on input voltage V(in). In response to performing DC-to-DC conversion input voltage V(in), power converter 131 may step down input voltage V(in) to the output voltage V(out). In such examples, the voltage level of the output voltage V(out) is lower than the voltage level of the input voltage V(in).

The capacitive buck command from control circuitry 111 may include a voltage set point. The voltage set point is a predetermined user setting that represents a maximum voltage level for the input voltage V(in). Capacitive buck controller 212 to output, to switch controller 214, the maximum voltage level for the input voltage V(in) in the form of voltage V(max). Switch controller 214 may output voltage V(max) to level shifter 215.

Level shifters 215-218 may drive switches Q219-Q222. Signal PH may be applied to switches Q219 and Q221 and inverted signal PH being applied to switches Q220 and Q222. Power converter 131 may adjust the voltage level of the output voltage V(out) as a function of the voltage level of the input voltage V(in). As long as input voltage V(in) is less than or equal to voltage V(max):

$$\text{output voltage } V(out) = \text{input voltage } V(in) \ / \ 2$$

Level shifter 215 may substitute a voltage V(boot1) with voltage V(max) in the event that input voltage V(in) exceeds voltage V(max). In the event that input voltage V(in) exceeds voltage V(max):

$$\text{output voltage V(out) = voltage V(max)}$$

In cases where power converter 131 is configured as the capacitive buck converter, power converter 131 is inhibited from operating as the voltage limiter. Power converter 131 is also inhibited from operating as the multi-level buck converter in cases where power converter 131 is configured as the capacitive buck converter. Typically, inductor L228 may be omitted in cases where power converter 131 is configured as the capacitive buck converter.

The example of FIG. 5 illustrates power converter 131 configured as the multi-level buck converter. The multi-level buck converter, also known as a step-down converter, is circuitry that reduces a higher-level voltage to multiple distinct intermediate voltage levels. An intermediate voltage level is lower than another intermediate voltage level. Power converter 131 may step down input voltage V(in) to one or more intermediate voltage levels prior to stepping down the one or more intermediate voltage levels to the output voltage V(out) so that the voltage level of the output voltage V(out) is lower than the voltage level of the input voltage V(in). Power converter 131 may perform DC-to-DC conversion on input voltage V(in) in response to being configured as the multi-level buck converter.

A multi-level buck command from control circuitry 111 may configure power converter 131 to operate as a multi-level buck converter. For example, the multi-level buck command may configure multi-level buck controller 213 to modify the voltage level ratio of the input voltage V(in) to the output voltage V(out). In these instances, control circuitry 111 may adjust the multi-level buck command depending on the voltage levels of input voltage V(in) and the output voltage V(out). Modifying the voltage level ratio of the input voltage V(in) to the output voltage V(out) may cause the power converter 131 to produce the output voltage V(out) at one of the intermediate voltage levels.

Typically, inductor L228 may be present in response to power converter 131 is configured as the multi-level buck converter. The multi-level buck command may cause switch controller 214 to output signals G1 through G4 from multi-level buck controller 213 in the manner shown in FIG. 5. In cases where power converter 131 is configured as the multi-level buck converter, power converter 131 is inhibited from operating as the voltage limiter. Power converter 131 is also inhibited from operating as the capacitive buck converter in cases where power converter 131 is configured as the multi-level buck converter.

As an improved electronic device, device 100 may include control circuitry 111, power receiver unit 121, and power converter 131. Power converter 131 may deliver multi-functional power regulation that can be pre-programmed depending on a functional application of power converter 131. Functional applications performed by power converter 131 may include linear voltage regulation in response to power converter 131 being configured as a voltage limiter in the example of FIG. 3, capacitive voltage buck regulation in response to power converter 131 being configured as a capacitive buck converter in the example of FIG. 4, and inductive voltage buck regulation in response to power converter 131 is configured as a multi-level buck converter in the example of FIG. 5. Individually, each functional application may consume a significant amount of area on a semiconductor integrated circuit chip, which can increase the cost of the electronic device and can result in an increased consumption of power. However, merging functional applications to common components may result in the delivery of multi-functional power regulation at a reduced cost of the electronic device and can result in a reduce consumption of power.

Those skilled in the art will also appreciate the arrangement or interconnection of components such as "coupled," "connected," "on," "under," or similar wording allows for indirect connections, or intervening components or layers.

Certain operations of methods according to the technology, or of systems executing those methods, may be represented schematically in the figures or otherwise discussed herein. Unless otherwise specified or limited, representation in the figures of particular operations in particular spatial order may not necessarily require those operations to be executed in a particular sequence corresponding to the particular spatial order. Correspondingly, certain operations represented in the figures, or otherwise disclosed herein, may be executed in different orders than are expressly illustrated or described, as appropriate for particular examples of the technology. Further, in some examples, certain operations may be executed in parallel or partially in parallel, including by dedicated parallel processing devices, or separate computing devices configured to interoperate as part of a large system.

As used herein, unless otherwise limited or defined, "or" indicates a non-exclusive list of components or operations that may be present in any variety of combinations, rather than an exclusive list of components that may be present only as alternatives to each other. For example, a list of "A, B, or C" indicates options of: A; B; C; A and B; A and C; B and C; and A, B, and C.

Correspondingly, the term "or" as used herein is intended to indicate exclusive alternatives only when preceded by terms of exclusivity, such as, e.g., "either," "only one of," or "exactly one of." Further, a list preceded by "one or more" (and variations thereon) and including "or" to separate listed elements indicates options of one or more of any or all of the listed elements.

For example, the phrases "one or more of A, B, or C" and "at least one of A, B, or C" indicate options of: one or more A; one or more B; one or more C; one or more A and one or more B; one or more B and one or more C; one or more A and one or more C; and one or more of each of A, B, and C.

Similarly, a list preceded by "a plurality of" (and variations thereon) and including "or" to separate listed elements indicates options of multiple instances of any or all of the listed elements. For example, the phrases "a plurality of A, B, or C" and "two or more of A, B, or C" indicate options of: A and B; B and C; A and C; and A, B, and C.

In general, the term "or" as used herein only indicates exclusive alternatives (e.g., "one or the other but not both") when preceded by terms of exclusivity, such as, e.g., "either," "only one of," or "exactly one of."

Any mark, if referenced herein, may be common law or registered trademarks of third parties affiliated or unaffiliated with the applicant or the assignee. Use of these marks is by way of example and shall not be construed as descriptive or to limit the scope of disclosed or claimed embodiments to material associated only with such marks.

The articles "a," "an," and "the" are intended to include the plural forms as well, unless the context clearly indicates otherwise.

The terms "comprises," "includes," and "has" specify the presence of stated features, numbers, operations, members, elements, and/or combinations thereof, but do not preclude the presence or addition of one or more other features, numbers, operations, members, elements, and/or combinations thereof.

Throughout the application, ordinal numbers (e.g., first, second, third, etc.) may be used as an adjective for an element (i.e., any noun in the application).

Although terms such as "first," "second," and "third" may be used herein to describe various members, components, regions, layers, or sections, these members, components, regions, layers, or sections are not to be limited by these terms.

Rather, these terms are only used to distinguish one member, component, region, layer, or section from another member, component, region, layer, or section.

The use of ordinal numbers is not to imply or create any particular ordering of the elements nor to limit any element to being only a single element unless expressly disclosed, such as by the use of the terms "before," "after," "single," and other such terminology.

Rather, the use of ordinal numbers is to distinguish between the elements.

By way of an example, a first element is distinct from a second element, and the first element may encompass more than one element and succeed (or precede) the second element in an ordering of elements.

Thus, a first member, component, region, layer, or section referred to in examples described herein may also be referred to as a second member, component, region, layer, or section without departing from the teachings of the examples.

**Claims**

1. An integrated circuit chip comprising:

   a vlimiter controller in the integrated circuit chip, the vlimiter controller is configured to output vlimiter signals that cause the integrated circuit chip to perform as a voltage limiter;
   a capacitive buck controller in the integrated circuit chip, the capacitive buck controller is configured to output capacitive buck signals that cause the integrated circuit chip to perform as a capacitive buck converter;
   a multi-level buck controller in the integrated circuit chip, the multi-level buck controller is configured to output multi-level buck signals that cause the integrated circuit chip to perform as a multi-level buck converter; and
   a switch controller in the integrated circuit chip, the switch controller is configured to select between the vlimiter signals, the capacitive buck signals and the multi-level buck signals.

2. The integrated circuit chip according to claim 1, further comprising:

   common components in the integrated circuit chip, the common components comprise a plurality of switches, in particular, wherein the common components comprise a plurality of level shifters.

3. The integrated circuit chip according to claim 2, wherein the switch controller is configured to output, in response to selecting the vlimiter signals, the vlimiter signals to the common components.

4. The integrated circuit chip according to claim 3, wherein the vlimiter controller is configured to output, in response to receiving a vlimiter command, the vlimiter signals to the switch controller.

5. The integrated circuit chip according to claim 4, wherein the switch controller is configured to output, in response to receiving the vlimiter command, the vlimiter signals to the common components, and
   in particular, wherein the integrated circuit chip is configured to perform as the voltage limiter in response to the switch controller outputting the vlimiter signals to the common components.

6. The integrated circuit chip according to claim 5, wherein the voltage limiter comprises a plurality of capacitors external to the integrated circuit chip.

7. The integrated circuit chip according to one of the claims 2 to 6, wherein the switch controller is configured to output, in response to selecting the capacitive buck signals, the capacitive buck signals to the common components.

8. The integrated circuit chip according to claim 7, wherein the capacitive buck controller is configured to output, in response to receiving a capacitive buck command, the capacitive buck signals to the switch controller.

9. The integrated circuit chip according to claim 8, wherein the switch controller is configured to output, in response to receiving the capacitive buck command, the capacitive buck signals to the common components.

10. The integrated circuit chip according to claim 9, wherein the integrated circuit chip is configured to perform as the capacitive buck converter in response to the switch controller outputting the capacitive buck signals to the common components, and
in particular, wherein the capacitive buck converter comprises a plurality of capacitors external to the integrated circuit chip.

11. The integrated circuit chip according to one of the claims 2 to 10, wherein the switch controller is configured to output, in response to selecting the multi-level buck signals, the multi-level buck signals to the common components.

12. The integrated circuit chip according to claim 11, wherein the multi-level buck controller is configured to output, in response to receiving a multi-level buck command, the multi-level buck signals to the switch controller.

13. The integrated circuit chip according to claim 12, wherein the switch controller is configured to output, in response to receiving the multi-level buck command, the multi-level buck signals to the common components.

14. The integrated circuit chip according to claim 13, wherein the integrated circuit chip is configured to perform as the multi-level buck converter in response to the switch controller outputting the multi-level buck signals to the common components, and

in particular, wherein the multi-level buck converter comprises a plurality of capacitors external to the integrated circuit chip, and/or
wherein the multi-level buck converter comprises an inductor external to the integrated circuit chip.

15. The integrated circuit chip according to one of the preceding claims, wherein the integrated circuit chip is mountable onto a motherboard.

EP 4 708 654 A1

# FIG. 1

# FIG. 2 – Power Converter 131 (Overview)

EP 4 708 654 A1

# FIG. 3 – Power Converter 131 (Voltage Limiter)

**FIG. 4 – Power Converter 131 (Capacitive Buck)**

FIG. 5 – Power Converter 131 (Multi-Level Buck)

## EUROPEAN SEARCH REPORT

**Application Number**

EP 25 19 7003

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/190921 A1 (KUMAR PAVAN [US] ET AL) 30 June 2016 (2016-06-30)<br>* paragraph [0029] - paragraph [0032] *<br>* paragraph [0034] *<br>* paragraph [0053] - paragraph [0054] *<br>* figures 1-5 *<br>----- | 1-15 | INV.<br>H02M1/00<br>H02M3/07<br>H02M3/158<br><br>ADD.<br>H02M1/32 |
| A | LIU XUN ET AL: "A Multi-Loop-Controlled AC-Coupling Supply Modulator With a Mode-Switching CMOS PA in an EER System With Envelope Shaping",<br>IEEE JOURNAL OF SOLID-STATE CIRCUITS, IEEE, USA,<br>vol. 54, no. 6, 1 June 2019 (2019-06-01), pages 1553-1563, XP011726736,<br>ISSN: 0018-9200, DOI:<br>10.1109/JSSC.2019.2892555<br>[retrieved on 2019-05-23]<br>* abstract; figure 6 *<br>----- | 2 | |

TECHNICAL FIELDS
SEARCHED (IPC)

H02M

The present search report has been drawn up for all claims

| Place of search | Date of completion of the search | Examiner |
|---|---|---|
| The Hague | 30 January 2026 | Madouroglou, E |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
........................................................................................
& : member of the same patent family, corresponding
   document

EPO FORM 1503 03.82 (P04C01)

# EP 4 708 654 A1

## ANNEX TO THE EUROPEAN SEARCH REPORT
## ON EUROPEAN PATENT APPLICATION NO.

EP 25 19 7003

This annex lists the patent family members relating to the patent documents cited in the above-mentioned European search report.
The members are as contained in the European Patent Office EDP file on
The European Patent Office is in no way liable for these particulars which are merely given for the purpose of information.

30-01-2026

| Patent document cited in search report | Publication date | Patent family member(s) | Publication date |
|---|---|---|---|
| US 2016190921 A1 | 30-06-2016 | BR 112017010553 A2 | 26-12-2017 |
| | | EP 3238332 A2 | 01-11-2017 |
| | | JP 6672312 B2 | 25-03-2020 |
| | | JP 2018500872 A | 11-01-2018 |
| | | US 2016190921 A1 | 30-06-2016 |
| | | WO 2016140719 A2 | 09-09-2016 |

EPO FORM P0459

For more details about this annex : see Official Journal of the European Patent Office, No. 12/82

14